# EUROPEAN PATENT APPLICATION

(11) **EP 4 527 665 A1**
(43) Date of publication of application: **26.03.2025**
(21) Application number: 24197995.4
(22) Date of filing: 02.09.2024
(51) Int. Cl.: B60L 3/00, B60L 53/14, B60L 53/16, B60L 53/18, B60L 53/30, B60L 53/31

(54) **ELECTRIC VEHICLE CHARGING STATION**

(30) Priority: 25.09.2023 GB 202314664
(71) Applicant: F.W. Thorpe Public Limited Company, Redditch Worcestershire B98 9HH (GB)
(72) Inventor: Meaking, Andrew, Redditch, B98 9HH (GB)
(74) Representative: Swindell & Pearson Limited

(57) **Abstract**

An electric vehicle charging station. The electric vehicle charging station comprises a charging outlet, the charging outlet being configured to couple to an electric vehicle charging cable. The electric vehicle charging station further comprises one or more ultraviolet (UV) light sources configured to illuminate one or more indicators.

## Description

### TECHNOLOGICAL FIELD

Embodiments of the present disclosure relate to electric vehicle charging. Some relate to an electric vehicle charging station comprising a UV light source.

### BACKGROUND

Electric vehicle charging cables connected to an electric vehicle charging station represent a safety hazard for pedestrians or other road users. The cable may obstruct an adjacent parking bay, or the cable can present a trip hazard to cyclists or pedestrians using an adjacent walkway.

In addition, the electric vehicle charging cables operate at high voltages. Damage to the cables can therefore introduce significant danger of electrocution.

### BRIEF SUMMARY

According to various, but not necessarily all, examples there is provided an electric vehicle charging station comprising: a charging outlet, the charging outlet being configured to couple to an electric vehicle charging cable; and one or more ultraviolet (UV) light sources configured to illuminate one or more indicators.

The one or more UV light sources may comprise a UV light emitting diode (LED) and/or a UV lamp. The one or more UV light sources may comprise a UV light emitting diode (LED).

The one or more UV light sources may comprise a filter configured to filter out visible light. The filter may be a band-pass filter.

The one or more UV light sources may be configured to direct the UV light emitted therefrom at least partially in a downward direction. The one or more UV light sources may be configured to direct substantially all of the UV light emitted therefrom at least partially in a downward direction.

The electric vehicle charging station may further comprise a housing, the housing comprising the charging outlet. The one or more UV light sources may be located within the housing or on the housing. The one or more UV light sources may be located on a same face of the housing as the charging outlet.

The electric vehicle charging station may further comprise a controller configured to control the one or more UV light sources.

The electric vehicle charging station may further comprise a luminance detector, and the controller may be configured to activate or deactivate the one or more UV light sources based on a signal from the luminance detector.

The electric vehicle charging station may further comprise a presence detector, and the controller may be configured to activate or deactivate the one or more UV light sources based on a signal from the presence detector.

The one or more UV light sources may be configured to emit a sequence of UV light pulses, and the controller may be configured to control the sequence of UV light pulses. The sequence of UV light pulses may comprise each pulse being for the same time period and/or each interval between the pulses being for the same time period. The frequency of the sequence may be less than or equal to 60 hertz.

The electric vehicle charging station may further comprise one or more visible light sources.

According to various, but not necessarily all, examples there is provided an electric vehicle charging system comprising: the electric vehicle charging station according to any of the preceding paragraphs; and one or more indicators, the indicators being configured to emit visible light in response to absorbing UV light.

The one or more indicators may be at least partly photoluminescent. The one or more indicators may comprise a fluorescent material.

The electric vehicle charging system may further comprise an electric vehicle charging cable, and the electric vehicle charging cable may comprise the one or more indicators. The one or more indicators may extend along at least the majority of the length of the electric vehicle charging cable.

The electric vehicle charging cable may comprise an electric vehicle charging handle and a power cable. Possibly, the one or more indicators form an integral part of the power cable. The one or more indicators may be an outer layer of the power cable. The one or more indicators may comprise a cable jacket. The cable jacket may extend along at least the majority of the length of the power cable. At least a portion of the cable jacket may be doped with a photoluminescent additive.

The one or more indicators may be provided on a floor.

The one or more indicators may comprise a photoluminescent additive. The one or more indicators may comprise a fluorescent additive. The one or more indicators may comprise photoluminescent paint or photoluminescent dye. The one or more indicators may comprise fluorescent paint or fluorescent dye. The one or more indicators may comprise photoluminescent tape. The one or more indicators may comprise fluorescent tape.

According to various, but not necessarily all, examples there is provided an electric vehicle charging system comprising: a charging outlet, the charging outlet being configured to couple to an electric vehicle charging cable; one or more ultraviolet (UV) light sources configured to illuminate one or more indicators; and one or more indicators, the indicators being configured to emit visible light in response to absorbing UV light.

The one or more indicators may be at least partly photoluminescent. The one or more indicators may comprise a fluorescent material.

The electric vehicle charging system may further comprise an electric vehicle charging cable, and the electric vehicle charging cable may comprise the one or more indicators. The one or more indicators may extend along at least the majority of the length of the electric vehicle charging cable.

The electric vehicle charging cable may comprise an electric vehicle charging handle and a power cable. Possibly, the one or more indicators form an integral part of the power cable. The one or more indicators may be an outer layer of the power cable. The one or more indicators may comprise a cable jacket. The cable jacket may extend along at least the majority of the length of the power cable. At least a portion of the cable jacket may be doped with a photoluminescent additive.

The one or more indicators may be provided on a floor.

The one or more indicators may comprise a photoluminescent additive. The one or more indicators may comprise a fluorescent additive. The one or more indicators may comprise photoluminescent paint or photoluminescent dye. The one or more indicators may comprise fluorescent paint or fluorescent dye. The one or more indicators may comprise photoluminescent tape. The one or more indicators may comprise fluorescent tape.

According to various, but not necessarily all, examples there is provided an electric vehicle charging cable comprising: one or more indicators, the indicators being configured to emit visible light in response to absorbing UV light.

The one or more indicators may extend along at least the majority of the length of the electric vehicle charging cable.

The electric vehicle charging cable may comprise an electric vehicle charging handle and a power cable. Possibly, the one or more indicators form an integral part of the power cable. The one or more indicators may be an outer layer of the power cable. The one or more indicators may comprise a cable jacket. The cable jacket may extend along at least the majority of the length of the power cable. At least a portion of the cable jacket may be doped with a photoluminescent additive.

The one or more indicators may comprise a photoluminescent additive. The one or more indicators may comprise a fluorescent additive. The one or more indicators may comprise photoluminescent paint or photoluminescent dye. The one or more indicators may comprise fluorescent paint or fluorescent dye. The one or more indicators may comprise photoluminescent tape. The one or more indicators may comprise fluorescent tape.

According to various, but not necessarily all, examples there is provided examples as claimed in the appended claims.

While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented by/comprised in/performable by an apparatus, a method, and/or computer program instructions as desired, and as appropriate.

### BRIEF DESCRIPTION

Some examples will now be described with reference to the accompanying drawings in which:
FIG. 1 shows a schematic of an electric vehicle charging station;
FIG. 2 shows a schematic of an electric vehicle charging system;
FIG. 3 shows an example electric vehicle charging station, an example electric vehicle charging cable apparatus, and an electric vehicle;
FIG. 4 shows the example electric vehicle charging cable apparatus;
FIGS. 5A and 5B show a front view of the example electric vehicle station with a UV light source turned on and off respectively;
FIG. 5C shows a front view of the example electric vehicle charging station with the UV light source turned on, along with an indicator on the floor;
FIG. 5D shows a perspective view of the example electric vehicle charging station with the UV light source turned on, along with the indicator on the floor; and
FIG. 6 illustrates an example controller.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

### DETAILED DESCRIPTION

Embodiments of the disclosure relate to an electric vehicle charging station 100, 1000 an electric vehicle charging cable 200, and an electric vehicle charging system 10, 20, 1100. One or more UV light sources 20, 1020 may be used to illuminate one or more indicators 50, 60, 1030. The one or more UV light sources 20, 1020 emitting UV light may cause the one or more indicators 50, 60, 1030 to emit visible light, providing enhanced visibility to users of the electric vehicle charging station 100, 1000, along with pedestrians, cyclists, or drivers.

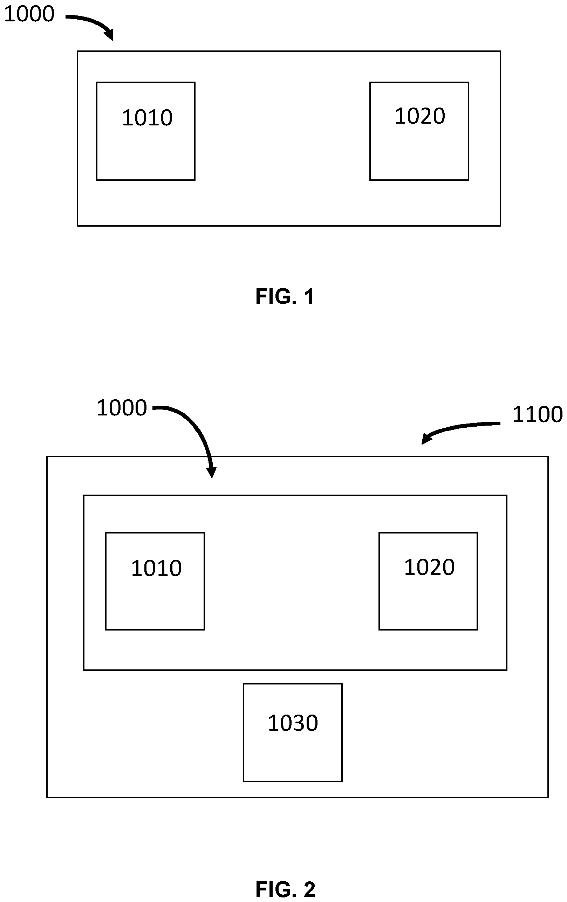

FIG. 1 shows a schematic of an electric vehicle charging station 1000. The electric vehicle charging station 1000 comprises one or more UV light sources 1020 and a charging outlet 1010. An electric vehicle charging station could also be referred to as an electric vehicle charge point or electric vehicle supply equipment (EVSE).

The one or more UV light sources 1020 are configured to emit UV light and illuminate one or more indicators. The one or more indicators are described in detail below in relation to FIG. 2.

The UV light source(s) 1020 may comprise any suitable UV light source for emitting UV light. Ultraviolet light is considered as electromagnetic radiation with a wavelength of from 10 nm to 400 nm. The UV light source(s) 1020 may comprise a UV light emitting diode (LED) or a UV lamp. The light emitted by the one or more UV light sources 1020 may have a wavelength of 100 nm to 400 nm. The light emitted by the one or more UV light sources 20 may have a wavelength of 300 nm to 400 nm.

The UV light source(s) 1020 may comprise a light source wherein the majority of the light emitted from the light source is UV light (as determined by spectral radiant flux measurements using a spectroradiometer). For example, the UV light source(s) 1020 may predominately emit UV light but may also emit some light in other ranges. For example, the UV light source(s) 1020 could also emit a small amount of visible light.

In examples where the UV light source(s) 1020 emit light outside the UV range the UV light source(s) 1020 may comprise a filter configured to block, or at least partially block, the light outside of the UV range. For example, if the UV light source(s) 1020 also emit some visible light the filter can be configured to block, or at least partially block, the visible light. Blocking unwanted light, such as visible light, can prevent the UV light source(s) 1020 emitting visible light to the indicator(s). Emitting visible light (i.e., in addition to UV light) to an indicator may reduce the visibility of the indicator in comparison to UV light source(s) 1020 emitting only UV light and would therefore be undesirable.

The filter may be configured to filter the majority of the visible light or other light outside of the UV range. The filter may be a band-pass filter, optical filter or any other suitable type of filter.

The UV light source(s) 1020 may be configured to direct the UV light emitted therefrom towards the indicator(s). In some examples, UV light source(s) 1020 are configured to direct the UV light emitted therefrom at least partially in a downward direction. The downward direction is the direction from the electric vehicle charging station 1000 towards the ground. Preferably, the UV light source(s) 1020 are configured to direct substantially all of the UV light emitted therefrom at least partially in a downward direction. In other words, UV light source(s) 1020 are configured to direct substantially none of the UV light emitted therefrom at least partially in an upward direction. Directing the UV light in a generally downward direction avoids directing UV light towards the face of any persons nearby. Furthermore, the light is directed towards any indicator(s) on the ground to alert any passersby to a potential hazard.

The UV light source(s) 1020 may be powered by an electrical grid (i.e., a mains power supply) or a power generator. Any number of intervening elements could exist between the UV light source(s) 1020 and the electrical grid, such as an AC to DC converter. Alternatively, the UV light source(s) 1020 could be powered by one or more batteries.

The charging outlet 1010 is configured to couple to an electric vehicle charging cable. In some examples, the electric vehicle charging station 1000 may comprise more than one charging outlet 1010. The charging outlet 1010 may be configured to provide an AC or a DC power supply.

In some examples, the charging outlet 1010 is configured to removably couple to an electric vehicle charging plug of an electric vehicle charging cable. The charging outlet 1010 may include a charging socket configured to couple to an electric vehicle charging plug of an electric vehicle charging cable. The charging socket may be configured to couple to any suitable type of electric vehicle charging plug. For instance, the charging socket could be configured to couple to an IEC 62196 type 2 plug, an SAE J1772 plug, an SAE J1772 combined charging system (CCS) plug, a SAE J3068 plug, a NACS plug, a CHAdeMO plug, an IEC 62196-3 CCS combo 2 plug, an IEC 62196-3 CCS plug, a GB/T 20234.2 plug, a GB/T 20234.3 plug, an NACS plug, a ChaoJi plug, other proprietary electric vehicle plugs, or combinations thereof. The charging socket could alternatively be configured to couple to an AC mains power plug, such as any of IEC TR 60083 World Plug Types A to O.

In other examples, the charging outlet 1010 could be configured to permanently couple to an electric vehicle charging cable, so that the electric vehicle charging cable is permanently attached to the charging outlet 1010 and the electric vehicle charging station 1000.

In some examples, the electric vehicle charging station 1000 comprises charge circuitry (not shown). The charging outlet 1010 may be coupled to the charge circuitry. The charge circuitry is configured to manage the power supplied to an electric vehicle via the electric vehicle charging cable.

The charging outlet 1010 is configured to couple to a power supply. Any number of intervening elements could exist between the charging outlet 1010 and the power supply (including no intervening elements), such as the charge circuitry. The power supply could be an electric grid (i.e., a mains power supply) or a power generator.

FIG. 2 shows a schematic of an electric vehicle charging system 1100. The electric vehicle charging system 1100 of FIG. 2 comprises the electric vehicle charging station 1000 of FIG. 1, along with one or more indicators 1030.

In some examples, the one or more indicators 1030 may be configured to emit visible light in response to absorbing UV light. The one or more indicators 1030 may absorb at least part of the ultraviolet light emitted by the UV light source 1020. For example, the indicator(s) 1030 may be configured to emit visible light in response to absorbing UV light emitted from the UV light source(s) 1020. The visible light emitted can alert any persons nearby to the presence of the indicator(s) 1030. The indicator(s) 1030 may be at least partly photoluminescent. The indicator(s) 1030 may be at least partly phosphorescent and/or fluorescent. The indicator(s) 1030 may comprise a fluorescent material, such as fluorescein, rhodamine, cyanine, and/or another fluorescent additive.

The indicator(s) 1030 may include any suitable indicator for use in an environment in which the electric vehicle charging station 1000 is located. For example, the indicator(s) 1030 could comprise at least one of a marker, dye, tape, or paint. The environment in which the electric vehicle charging station 1000 is located may be a street, a car park, a driveway, or a garage.

The indicator(s) 1030 may be configured to indicate the presence of an object, such as a vehicle or an electric vehicle charging cable. For example, the electric vehicle charging cable may comprise one or more indicators 1030, and/or one or more indicators 1030 may be provided on the floor nearby the charging socket 1010 of the electric vehicle charging station 1000.

A plurality of indicators 1030 may include a first indicator that is configured to emit visible light in a first colour and a second indicator that is configured to emit visible light in a second colour (i.e., different from the first colour). This enables different elements of an environment to be categorized to ensure easier identification of the elements to a user. For example, an electric vehicle charging cable may have indicators of a first colour (e.g., green) and warning signs on the floor may have indicators of a second colour (e.g., red).

It should be understood that the electric vehicle charging system 1100 of FIG. 2 may comprise one or more of the features of the electric vehicle charging station 1000 described above in relation to FIG. 1.

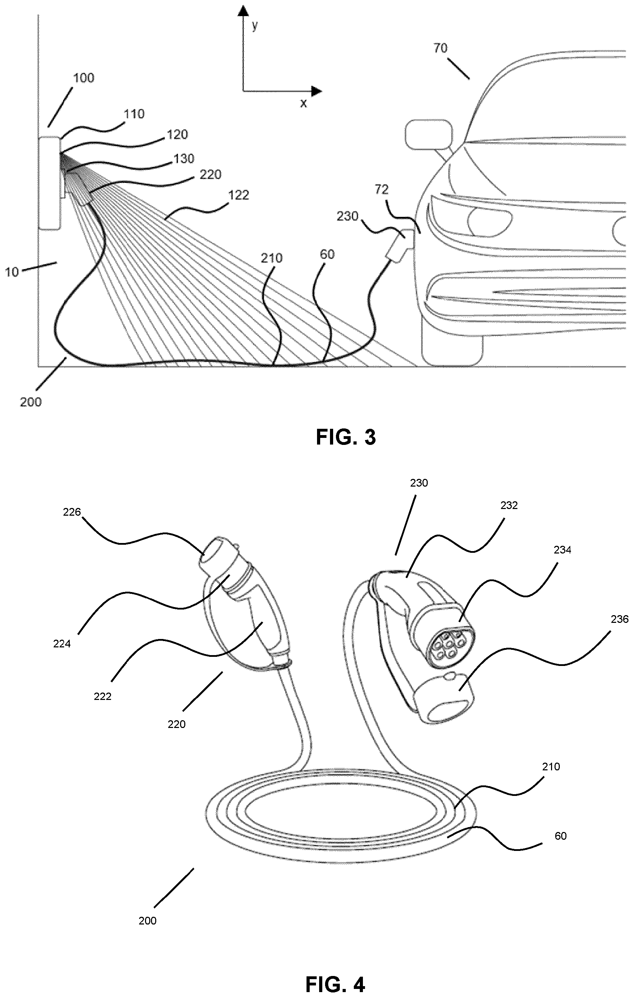

FIG. 3 illustrates a first example electric vehicle charging system 10 and an electric vehicle 70. The first example electric vehicle charging system 10 is hereafter referred to as the first example charging system 10. The first example charging system 10 comprises an example electric vehicle charging station 100 and an example electric vehicle charging cable 200.

The example electric vehicle charging station 100 includes a charging outlet 130, which in this example includes a charging socket (not shown). The charging socket is configured to couple to an electric vehicle charging plug 220.

The example electric vehicle charging station 100 further includes a UV light source 120. The UV light source 120 is configured to illuminate one or more indicators 60. The UV beam produced by the UV light source is labelled 122 in FIG. 3. In this example, the UV light source 120 comprises a UV light emitting diode (LED).

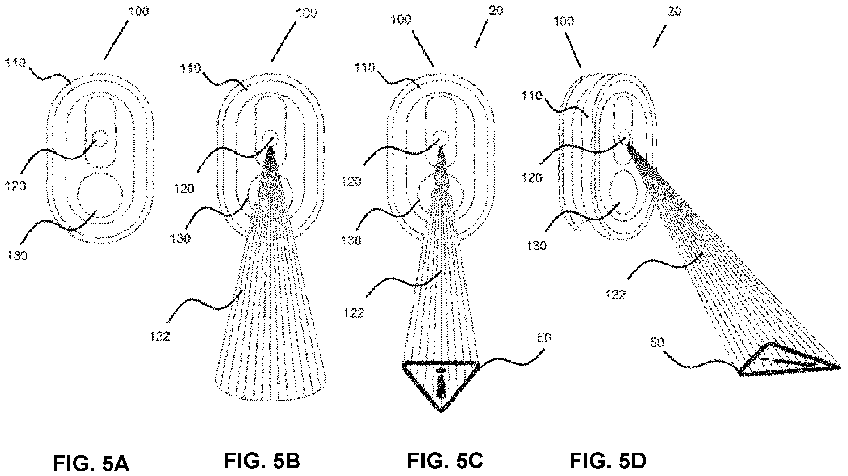

In some examples, such as the example of FIG. 3, the charging station 100 includes a housing 110. The housing 110 of the example electric vehicle charging station 100 is described in further detail in relation to FIGS. 5A to 5D below.

The example electric vehicle charging cable 200 of FIG. 3 is shown in more detail in FIG. 4. The example electric vehicle charging cable 200 includes an electric vehicle charging handle 230, a power cable 210, and a plug 220. The power cable 210 is elongate and flexible. A first end of the power cable 210 is coupled to the plug 220, and a second end is coupled to the electric vehicle charging handle 230. The power cable 210 could also be referred to as a power cord.

The plug 220 is configured to couple to the charging socket of the charging outlet 130. In use the charging outlet 130 is coupled to a power supply (not shown). Any number of intervening elements could exist between the charging socket 130 and the power supply (including no intervening elements). The power supply could be an electric grid (i.e., a mains supply) or a power generator.

The plug 220 includes a body 222 configured to be handled by a user and a plug connector 224 configured to couple to the charging socket. It is to be appreciated that any suitable type of plug connector 224 could be used, such as an IEC 62196 type 2 connector, an SAE J1772 connector, an SAE J1772 combined charging system (CCS) connector, a SAE J3068 connector, a NACS connector, a CHAdeMO connector, an IEC 62196-3 CCS combo 2 connector, an IEC 62196-3 CCS connector, a GB/T 20234.2 connector, a GB/T 20234.3 connector, an NACS connector, a ChaoJi connector, other proprietary electric vehicle plug connectors, or combinations thereof. In other examples, the plug connector 224 could be an AC mains power plug connector, such as any of IEC TR 60083 World Plug Types A to O. In some examples the plug 220 may include a removable cover 226 for protecting the connector 224 when not in use.

In some examples, the electric vehicle charging cable 200 might not include a plug 220. In such examples, the charging outlet 130 does not necessarily require a charging socket, and the first end of the power cable 210 is permanently coupled to the charging outlet 130 such that the electric vehicle charging cable 200 is permanently attached to the electric vehicle charging station 100.

The electric vehicle charging handle 230 includes a body 232 configured to be handled by a user, and a connector 234 configured to couple to a charge port 72 on an electric vehicle 70. It is to be appreciated that any suitable type of connector 234 could be used, such as an I EC 62196 type 2 connector, an SAE J1772 connector, an SAE J1772 combined charging system (CCS) connector, a SAE J3068 connector, a NACS connector, a CHAdeMO connector, an IEC 62196-3 CCS combo 2 connector, an IEC 62196-3 CCS connector, a GB/T 20234.2 connector, a GB/T 20234.3 connector, an NACS connector, a ChaoJi connector, other proprietary electric vehicle plug connectors, or combinations thereof. In some examples, the electric vehicle charging handle 230 includes a removable cover 236 for protecting the connector 234 when not in use.

In this example, the electric vehicle charging cable 200 includes an indicator 60. The indicator 60 is configured to emit visible light when exposed to UV light. The indicator 60 may extend along at least the majority of the length of the electric vehicle charging cable 200. The indicator 60 may comprise a photoluminescent material, which could be a fluorescent material or a phosphorescent material. The indicator 60 may comprise a fluorescent material, such as fluorescein, rhodamine, or cyanine.

In the example of FIGS. 3 and 4, the power cable 210 of the example electric vehicle charging cable 200 comprises the indicator 60. The indicator 60 may extend along at least the majority of the length of the power cable 210. In other words, a photoluminescent material may be provided along more than half the length of the power cable 210.

In some examples, the indicator 60 may form an integral part of the power cable 210. The indicator 60 may be an outer layer (such as an insulating layer) of the power cable 210. For instance, the indicator 60 could comprise a cable jacket of the power cable 210, wherein the cable jacket extends along the majority of the length of the power cable 210 or along the whole length of the power cable 210. A portion of the cable jacket or all of the cable jacket may be doped with a photoluminescent additive (i.e., a photoluminescent additive is mixed into the material forming the cable jacket). The photoluminescent additive could be a fluorescent additive. A portion of the cable jacket or all of the cable jacket may be made from a photoluminescent material, such as a fluorescent material. For instance, the cable jacket could be made from a photoluminescent polymer (such as a fluorescent polymer), or the cable jacket could be made from a polymer (such as PVC) doped with a photoluminescent additive (such as a fluorescent additive).

In some examples, the indicator 60 is in the form of a photoluminescent tape (such as fluorescent tape) or photoluminescent paint (such as fluorescent paint) applied to the exterior surface of the power cable 210. The indicator 60 (i.e., the photoluminescent tape or paint) may extend along at least the majority of the length of the exterior surface of the power cable 210. Where the indicator 60 is in the form of fluorescent tape, the fluorescent tape may be applied to the exterior of the outer surface of the power cable 210 in a spiral pattern.

When the UV light source 120 is turned on, this causes the indicator 60 to emit visible light, thereby alerting any persons nearby to the presence of the indicator 60. In this example, the indicator 60 alerts any persons nearby to the presence of the power cable 210, thereby reducing the trip hazard presented by the power cable 210. The indicator 60 can also assist a user of the example electric vehicle charging station 100 to locate the example electric vehicle charging cable 200.

In this example, the UV light source 120 is configured to direct the UV light emitted therefrom towards the indicator 60. The UV light source 120 is configured to direct the UV light emitted therefrom at least partially in a downward direction. The downward direction is the direction from the example electric vehicle charging station 100 towards the ground. Preferably, the UV light source 120 is configured to direct substantially all of the UV light emitted therefrom at least partially in a downward direction. In other words, the UV light source 120 is configured to direct substantially none of the UV light emitted therefrom at least partially in an upward direction. This is illustrated in FIG. 3 by the UV light beam 122, where the beam 122 is shown extending in a direction partially laterally from the light source and partially downwardly towards the ground. The downward direction is opposite to the y arrow shown in FIG. 3. Directing the UV light in a generally downward direction avoids directing UV light towards the face of any persons nearby. Furthermore, the light is directed towards any indicator(s) on the ground to alert any passersby to a potential hazard.

FIG. 5A shows a front view of the example electric vehicle charging station 100 when the UV light source 120 is not emitting UV light. FIG. 5B shows a front view the example electric vehicle charging station 100 when the UV light source 120 is emitting a beam of UV light 122.

The example electric vehicle charging station 100 includes the charging outlet 130 and the UV light source 120 as described previously. A cover may be provided over the charging socket of the charging outlet 130 when not in use to prevent water ingress.

In this example, the electric vehicle charging station 100 includes a housing 110. The housing 110 comprises the charging outlet 130. The UV light source 120 is located within the housing 110 or on the housing 110.

The housing 110 may be made from a plastics material or metal. In some examples, the housing 110 may house electronic equipment such as a connector configured to couple to a power supply (the power supply could be an electric grid or a generator), a circuit breaker, a transformer, an AC to DC converter, and/or charge circuitry for controlling the power supplied to the electric vehicle. The housing 110 may be mounted to a wall or a support. The housing 110 could be mounted to a wall or a support using one or more fasteners such as screws.

In the example of FIGS. 5A to 5D, the housing 110 has a front face and rear face (not shown). In this example, the UV light source 120 and the charging outlet 130 are provided on the front face of the housing 110. The front face could also include a display to indicate the charging status. The rear face may include a mounting portion for attaching the housing to a wall or support. The mounting portion may be attached to a mounting bracket on the wall or support using one or more fasteners such as screws.

FIG. 5B shows a front view the example electric vehicle charging station 100 when the UV light source 120 is emitting a beam of UV light 122. In this example, the UV light source 120 is configured to direct the UV light emitted therefrom at least partially in a downward direction. Preferably, the UV light source 120 is configured to direct substantially all of the UV light emitted therefrom at least partially in a downward direction. In other words, the UV light source 120 is configured to direct substantially none of the UV light emitted therefrom at least partially in an upward direction. This is illustrated in FIG. 5B by the UV light beam 122, where the beam 122 is shown extending in a direction partially laterally from the light source and partially downwardly towards the ground. The downward direction is opposite to the y arrow shown in FIG. 5B. Directing the UV light in a generally downward direction avoids directing UV light towards the face of any persons nearby. Furthermore, the light is directed towards any indicator(s) on the ground to alert any passersby to a potential hazard.

FIGS. 5C and 5D illustrate a second example electric vehicle charging system 20 comprising the example electric vehicle charging station 100 of FIGS. 3, 5A and 5B, along with an indicator 50.

FIG. 5C shows the example electric vehicle charging station 100 when the UV light source 120 is emitting the beam 122 of UV light onto the indicator 50. The indicator 50 is provided on a floor, which could be a pavement, a driveway, a car park surface, or a road surface. The indicator 50 emits visible light when exposed to the beam 122 of UV light. FIG. 5D shows the example electric vehicle charging station 100 of FIG. 5C from a perspective view.

The indicator 50 of FIGS. 5C and 5D is configured to emit visible light when exposed to UV light. The indicator 50 may comprise a fluorescent material, such as fluorescein, rhodamine, or cyanine. In this particular example, the indicator 50 is a fluorescent sign attached to the ground. The fluorescent sign is a fluorescent warning sign in this example, which can alert a passerby to the presence of the example electric vehicle charging station 100.

### Controller

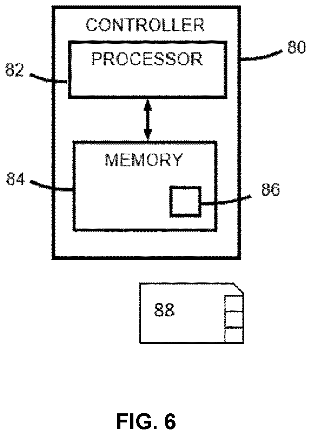

In some examples, which could be any of the examples shown in FIGS. 1 to 5D, the electric vehicle charging station 100, 1000 further comprises a controller 80. A schematic of an example controller 80 is shown in FIG. 6. The controller 80 is configured to control the one or more UV light sources 120, 1020. The controller 80 may be configured to activate or deactivate the one or more UV light sources 120, 1020. When activated, the one or more UV light sources 120, 1020 could emit a continuous beam of UV light or a sequence of UV light pulses.

The controller 80 is operationally coupled to the one or more UV light sources 120, 1020 and any number or combination of intervening elements can exist (including no intervening elements) between the controller 80 and the one or more UV light sources 120, 1020. For example, additional electrical circuitry may be present between the controller 80 and each UV light source 120, 1020 to enable the controller 80 to control each UV light source 120, 1020.

The electric vehicle charging station 100, 1000 may further comprise at least one of: user input circuitry, a presence detector, timing circuitry, a luminance detector, and/or charge circuitry.

In examples where the electric vehicle charging station 100, 1000 comprises user input circuitry, the controller 80 is configured to activate or deactivate the one or more UV light sources 120, 1020 based on a signal from the user input circuitry. The user input circuitry may be operationally coupled to the controller 80 and any number or combination of intervening elements can exist (including no intervening elements) between the controller 80 and the user input circuitry. The user input circuitry 30 may comprise means for receiving at least one input from a user. The user input circuitry might, for example, comprise one or more keys and/or one or more buttons. In some embodiments, some or all of the user input circuitry might be integrated with a display (not shown). The user might press a button or key to activate or deactivate the one or more UV light sources 120, 1020, causing the user input circuitry to send a signal to the controller 80. The controller 80 may be configured to activate or deactivate the one or more UV light sources 120, 1020 based on this signal from the user input circuitry.

In examples where the electric vehicle charging station 100, 1000 comprises a presence detector, the controller 80 is configured to activate or deactivate the one or more UV light sources 120, 1020 based on a signal from the presence detector. The presence detector may be operationally coupled to the controller 80 and any number or combination of intervening elements can exist (including no intervening elements) between the controller 80 and the presence detector. The presence detector might, for instance, be a microwave presence detector or a radar presence detector. The presence detector is configured to detect the presence of one or more people or a vehicle adjacent to the electric vehicle charging station 100, 1000, such as by detecting motion. If the presence of a person or a vehicle is detected, the presence detector may send a signal to the controller 80. The controller 80 may be configured to activate or deactivate the one or more UV light sources 120, 1020 based on this signal from the presence detector.

In examples where the electric vehicle charging station 100, 1000 comprises timing circuitry, the controller 80 is configured to activate or deactivate the one or more UV light sources 120, 1020 based on a signal from the timing circuitry. The timing circuitry may be operationally coupled to the controller 80 and any number or combination of intervening elements can exist (including no intervening elements) between the controller 80 and the timing circuitry. The timing circuitry may send a signal to the controller 80 indicating the time of day. The controller 80 may be configured to activate or deactivate the one or more UV light sources 120, 1020 based on this signal from the timing circuitry.

In examples where the electric vehicle charging station 100, 1000 comprises a luminance detector, the controller 80 is configured to activate or deactivate the one or more UV light sources 120, 1020 based on a signal from the luminance detector. The presence detector may be operationally coupled to the controller 80 and any number or combination of intervening elements can exist (including no intervening elements) between the controller 80 and the luminance detector. The luminance detector might, for instance, include a photocell configured to detect the amount of ambient light. The luminance detector may send a signal to the controller 80 indicating the amount of ambient light. The controller 80 may be configured to activate or deactivate the one or more UV light sources 120, 1020 based on this signal from the luminance detector. For instance, the controller 80 could activate or deactivate the one or more UV light sources 120, 1020 if the signal indicates that a predetermined threshold of ambient light has been met.

In examples where the electric vehicle charging station 100, 1000 comprises charge circuitry, the controller 80 is configured to activate or deactivate the one or more UV light sources 120, 1020 based on a signal from the charge circuitry. The charge circuitry may be operationally coupled to the controller 80 and any number or combination of intervening elements can exist (including no intervening elements) between the controller 80 and the charge circuitry. The charge circuitry might, for instance, be configured to detect when the electric vehicle charging station 100, 1000 has been connected to an electric vehicle and/or detect when the electric vehicle charging station 100, 1000 is providing power to an electric vehicle, and send a signal to the controller 80. For instance, the controller 80 may be configured to activate or deactivate the one or more UV light sources 120, 1020 based on this signal from the charge circuitry. The signal could indicate that the electric vehicle charging station 100, 1000 has been connected to an electric vehicle and/or a signal indicating that the electric vehicle charging station 100, 1000 is providing power to an electric vehicle.

In some examples, the one or more UV light sources 120, 1020 are configured to emit a sequence of UV light pulses. The one or more indicators 50, 60, 1030 may be configured to emit a pulse of visible light in response to absorbing a pulse of UV light emitted from the one or more UV light sources 120, 1020. The one or more indicators 50, 60, 1030 may be configured to emit a sequence of pulses of visible light in response to absorbing a sequence of pulses of UV light emitted from the one or more UV light sources 120, 1020. The one or more indicators 50, 60, 1030 emitting pulses of visible light may cause the appearance of the one or more indicators 50, 60, 1030 to be flashing (rather than being continuously illuminated) thereby improving the visibility of the one or more indicators 50, 60, 1030 to users or passersby. Flashing UV light also causes minimal light spill/pollution when compared to flashing visible light. The example controller 80 may be configured to control the sequence of UV light pulses.

A UV light pulse may be a short burst of UV light. A sequence of UV light pulses may be a plurality of short bursts of UV light. A UV light pulse may be caused by a pulse of electrical current being applied to the one or more UV light sources 120, 1020 (e.g., by the controller 80).

The sequence of UV light pulses may comprise each pulse being for the same time period and/or each interval between the pulses being for the same time period. For example, each burst of UV light may be for the same duration of time and/or each interval between the burst of UV light may be for the same duration of time.

The UV light source(s) 120, 1020 may be configured to emit pulses of UV light at any suitable frequency to which subsequent visible light would be visible to a user. In other words, a user seeing one or more indicators 50, 60, 1030 emitting visible light in response to receiving at least part of the sequence of UV light pulse would be able to see the indicator(s) 50, 60, 1030 flashing rather than continuously emitting visible light.

The frequency of the sequence of UV pulses may be less than or equal to 60 hertz. The frequency of the sequence of UV pulses may be less than or equal to 50 hertz. The frequency of the sequence of UV pulses may be less than or equal to 20 hertz. The frequency of the sequence of UV pulses may be less than or equal to 5 hertz. The frequency of the sequence of UV pulses may be less than or equal to 2 hertz. The frequency of the sequence of UV pulses may be less than or equal to 1 hertz. The frequency of the sequence of UV pulses may be less than or equal to 0.5 hertz. The frequency of the sequence of UV pulses may be less than or equal to 0.1 hertz.

The UV light source(s) 120, 1020 emitting a sequence of UV pulses at a frequency of 1 hertz may emit one UV pulse per second. The UV light source(s) 120, 1020 emitting a sequence of UV pulses at a frequency of 2 hertz may emit two UV pulses per second.

The controller may be any suitable controller for controlling the sequence of UV light pulses. For example, the controller may comprise mechanical circuitry configured to control the sequence of UV light pulses. The controller may comprise electromagnetic circuitry to control the sequence of UV light pulses. The controller may comprise an integrated circuit to control the sequence of UV light pulses. The integrated circuit may comprise a timer. For example, the integrated circuit may comprise a 555 timer.

Additionally, or alternatively, the controller 80 may comprise at least one processor 82; and at least one memory 84 including computer program code 86 configured to, with the at least one processor 82, cause the one or UV light sources 120, 1020 to emit the sequence of UV light pulses. An example of such a controller is shown in FIG. 6.

The controller 80 may, for example, be a chipset. The illustrated controller 80 in FIG. 6 comprises at least one processor/processing circuitry 82 and at least one memory 84. The controller 80 may be implemented in hardware alone, have certain aspects in software including firmware alone or can be a combination of hardware and software (including firmware).

The processor 82 is configured to read from and write to the memory 84. The processor 82 may also comprise an output interface via which data and/or commands are output by the processor 82 and an input interface via which data and/or commands are input to the processor 82.

The memory 84 stores a computer program 86 comprising computer program instructions (computer program code) that controls the operation of the controller 80 when loaded into the processor 82. The computer program instructions, of the computer program 86, provide the logic and routines that enables the controller 80 to control the one or more UV light sources 120, 1020. The processor 82 by reading the memory 84 is able to load and execute the computer program 86.

As illustrated in FIG. 6, the computer program 86 may arrive at the controller 80 via any suitable delivery mechanism 88. The delivery mechanism 88 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 86. The delivery mechanism may be a signal configured to reliably transfer the computer program 86. The controller 80 may propagate or transmit the computer program 86 as a computer data signal.

The computer program instructions may be comprised in a computer program, a non-transitory computer readable medium, a computer program product, a machine readable medium. In some but not necessarily all examples, the computer program instructions may be distributed over more than one computer program.

Although the memory 84 is illustrated as a single component/circuitry it may be implemented as one or more separate components/circuitry some or all of which may be integrated/removable and/or may provide permanent/semi-permanent/ dynamic/cached storage.

Although the processor 82 is illustrated as a single component/circuitry it may be implemented as one or more separate components/circuitry some or all of which may be integrated/removable. The processor 82 may be a single core or multi-core processor.

The memory 84 may store data. The data may include, for example, one or more sequences. Each sequence may comprise at least one or more of UV pulse: illuminance, duration, interval duration, frequency. The sequence(s) may be stored in the memory of the electric vehicle charging station 100, 1000 (i.e., a local memory of the electric vehicle charging station 100, 1000) and/or in a remote memory associated with the electric vehicle charging station 100, 1000 (e.g., a server connected to the electric vehicle charging station 100, 1000). Additionally, or alternatively, the sequence(s) may be determined from information input by a user via the user input circuitry.

In some examples, the same controller 80 may be configured to control both the i) activation or deactivation of the one or more UV light sources 120, 1020, and also ii) the sequence of UV light pulses. In other examples, a first controller, such as example controller 80, may be configured to control both the activation or deactivation of the one or more UV light sources 120, 1020, and a second controller, such as a second example controller 80, may be configured to control the sequence of UV light pulses.

There is thus described an electric vehicle charging station 100, 1000, an electric vehicle charging system 10, 20, 1100, and an electric vehicle charging cable 200 with a number of advantages. Electric vehicle charging cables are a significant trip hazard and operate at high voltages. Safety is therefore significantly improved, with the UV light source(s) 120, 1020 highlighting the one or more indicators 50, 60, 1030, which alert a user or passerby to potential trip hazards such as cables, baggage, curbs, or other vehicles. Locations for electric vehicle charging stations, such as car parks, driveways or garages are often dimly lit, which exacerbates the risk of tripping. The indicator(s) 50, 60, 1030 particularly stand out in these generally dim lighting conditions. As an alternative, if the area were to be lit by powerful visible light sources, such as flood lighting, the trip hazards would not stand out relative to the rest of the environment as the whole environment would be lit to the same level.

Only a small area is required to be lit by the UV light source(s) 120, 1020 to provide the alert to a user. This means that much fewer visible light fixtures such as flood lighting are required in the vicinity of the electric vehicle charging station 100, 1000. This provides a significant energy and cost saving for the electric vehicle charging station 100, 1000, along with environmental benefits. Light pollution of the environment is also significantly reduced.

The indicator(s) 50, 60, 1030 do not require their own power source to provide the alert to a user, so can be placed in many locations without difficulty, and are also much simpler and lower cost to implement. For instance, integrating traditional lighting into an electric vehicle charging cable would be complex and potentially unsafe due to the high operating voltage of the cable. There is a single point of failure (i.e., whether the UV light source(s) 120, 1020 are emitting UV light towards the indicator indicator(s) 50, 60, 1030), which improves reliability.

Various other modifications may be made without departing from the scope of the disclosure. For instance, the electric vehicle charging station 100, 1000 may comprise one or multiple charging outlets 130, 1010. Any number of UV light source(s) 120, 1020 could be used. The electric vehicle charging station 100, 1000 could comprise a combination of one or more visible light sources and one or more UV light sources 120, 1020. The configuration and/or placement of the UV light source(s) 120, 1020 could be modified. Some or all of the one or more UV light sources 120, 1020 could be located separately from the housing 110. For instance, the UV light source(s) 120, 1020 could be mounted to a nearby wall and/or lamppost. The housing 110 could be differently shaped. The electric vehicle charging station 100, 1000 might not include a housing 110. The electric vehicle charging cable 200 could be differently structured and/or be made from different materials. The electric vehicle charging cable 200 might not include a plug 230. The indicator(s) 50, 60, 1030 may be made from different materials.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, the wording 'connect', 'couple' and 'communication' and their derivatives mean operationally connected/coupled/in communication. It should be appreciated that any number or combination of intervening components can exist (including no intervening components), i.e., so as to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a', 'an' or `the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or `the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance it should be understood that the applicant may seek protection via the claims in respect of any patentable feature or combination of features hereinbefore referred to and/or shown in the drawings whether or not emphasis has been placed thereon.

## Claims

1. An electric vehicle charging station comprising:
a charging outlet, the charging outlet being configured to couple to an electric vehicle charging cable; and
one or more ultraviolet (UV) light sources configured to illuminate one or more indicators.

2. An electric vehicle charging station according to claim 1, wherein the one or more UV light sources comprise a UV light emitting diode (LED) and/or a UV lamp.

3. An electric vehicle charging station according to claim 2, wherein the one or more UV light sources comprise a UV light emitting diode (LED).

4. An electric vehicle charging station according to any of claims 1 to 3, wherein the one or more UV light sources comprise a filter configured to filter out visible light, and optionally wherein the filter is a band-pass filter.

5. An electric vehicle charging station according to any of the preceding claims, wherein the one or more UV light sources are configured to direct the UV light emitted therefrom at least partially in a downward direction, and optionally wherein the one or more UV light sources are configured to direct substantially all of the UV light emitted therefrom at least partially in a downward direction.

6. An electric vehicle charging station according to any of the preceding claims, wherein the electric vehicle charging station further comprises a housing, the housing comprising the charging outlet, and optionally wherein the one or more UV light sources are located within the housing or on the housing, and optionally wherein the one or more UV light sources are located on a same face of the housing as the charging outlet.

7. An electric vehicle charging station according to any of the preceding claims, wherein the electric vehicle charging station further comprises a controller configured to control the one or more UV light sources, and optionally wherein the charging station further comprises a luminance detector, and the controller is configured to activate or deactivate the one or more UV light sources based on a signal from the luminance detector.

8. An electric vehicle charging station according to claim 7, wherein the charging station further comprises a presence detector, and the controller is configured to activate or deactivate the one or more UV light sources based on a signal from the presence detector.

9. An electric vehicle charging station according to claim 7 or 8, wherein the one or more UV light sources are configured to emit a sequence of UV light pulses, and the controller is configured to control the sequence of UV light pulses, and optionally wherein the sequence of UV light pulses comprises each pulse being for the same time period and/or each interval between the pulses being for the same time period, and optionally wherein the frequency of the sequence is less than or equal to 60 hertz.

10. An electric vehicle charging system comprising:
a charging outlet, the charging outlet being configured to couple to an electric vehicle charging cable;
one or more ultraviolet (UV) light sources configured to illuminate one or more indicators; and
one or more indicators, the indicators being configured to emit visible light in response to absorbing UV light.

11. An electric vehicle charging system according to claim 10, wherein the one or more indicators are at least partly photoluminescent, and optionally wherein the one or more indicators comprise a fluorescent material.

12. An electric vehicle charging system according to claim 10 or 11, wherein the electric vehicle charging system further comprises an electric vehicle charging cable, and the electric vehicle charging cable comprises the one or more indicators, and optionally wherein the one or more indicators extend along at least the majority of the length of the electric vehicle charging cable.

13. An electric vehicle charging system according to any of claims 10 to 12, wherein the one or more indicators are provided on a floor.

14. An electric vehicle charging system according to any of claims 10 to 12, wherein the one or more indicators comprise a cable jacket.

15. An electric vehicle charging cable comprising:
one or more indicators, the indicators being configured to emit visible light in response to absorbing UV light.
